(19) Europäisches Patentamt
European Patent Office
Office européen des brevets

(11) **EP 2 095 591 B1**

(12) **EUROPÄISCHE PATENTSCHRIFT**

(45) Veröffentlichungstag und Bekanntmachung des Hinweises auf die Patenterteilung:
**01.04.2015 Patentblatt 2015/14**

(21) Anmeldenummer: **07821077.0**

(22) Anmeldetag: **09.10.2007**

(51) Int Cl.:
***H04L 27/26*** *(2006.01)*

(86) Internationale Anmeldenummer:
**PCT/EP2007/060708**

(87) Internationale Veröffentlichungsnummer:
**WO 2008/043757 (17.04.2008 Gazette 2008/16)**

(54) **OFDM Kommunikationssystem mit schnellen Frequenzsprüngen**

OFDM communication system with fast frequency hops

Système de communication OFDM avec sauts de fréquence rapides

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **10.10.2006 DE 102006047978**

(43) Veröffentlichungstag der Anmeldung:
**02.09.2009 Patentblatt 2009/36**

(73) Patentinhaber:
• **Nokia Solutions and Networks GmbH & Co. KG
81541 Munich (DE)**
• **Fraunhofer-Gesellschaft zur Förderung der angewandten Forschung e.V.
80686 München (DE)**

(72) Erfinder:
• **JUNGNICKEL, Volker
10318 Berlin (DE)**
• **SCHULZ, Egon
80993 München (DE)**
• **ZIRWAS, Wolfgang
81249 München (DE)**

(74) Vertreter: **Weidel, Gottfried et al
Nokia Solutions and Networks GmbH & Co. KG
CEF T&I IPR Patent Administration
80240 Munich (DE)**

(56) Entgegenhaltungen:
**WO-A-2005/099146**

• **SCHOLAND T ET AL: "Fast frequency hopping OFDM concept" ELECTRONICS LETTERS, IEE STEVENAGE, GB, Bd. 41, Nr. 13, 23. Juni 2005 (2005-06-23), Seiten 748-749, XP006024654 ISSN: 0013-5194**

EP 2 095 591 B1

**Beschreibung**

Die Erfindung betrifft ein Verfahren zum Betrieb eines Funkkommunikationssystem, das OFDM verwendet, sowie ein entsprechendes Funkkommunikationssystem, eine entsprechende sendende Station und eine entsprechende empfangende Station.

In Funkkommunikationssystemen, die OFDM (Orthogonal Frequency Division Multiplex) verwenden, stehen während der Dauer eines OFDM-Symbols mehrere Subträger zur Datenübertragung zur Verfügung. Dabei kann von einer sendenden Station, beispielsweise einer Basisstation oder einer Teilnehmerstation, auf jeden Subträger jeweils ein OFDM-Symbol auf die jeweilige Trägerfrequenz aufmoduliert und gesendet werden. Ein OFDM-Symbol kann Nutz- und/oder Signalisierungsdaten enthalten. Weiterhin kann ein OFDM-Symbol auch als Referenzsymbol verwendet werden und von einem Empfänger zum Schätzen des Übertragungskanals verwendet werden. Während der Dauer eines OFDM-Symbols können einer oder mehrere Subträger zum Senden von Referenzsymbolen verwendet werden.

Sendet eine sendende Station ein Referenzsymbol auf einer Trägerfrequenz zur Kanalschätzung an eine empfangende Station, wird der Empfang des Referenzsymbols durch Interferenzen gestört. Es handelt sich dabei insbesondere um Interferenzen mit Referenzsymbolen, die die sendende Station in benachbarten Sektoren auf der Trägerfrequenz sendet oder um Interferenzen mit Referenzsymbolen, die in Funkreichweite der empfangenden Station befindliche andere sendende Stationen auf der Trägerfrequenz senden (inter cell interference). Um diese Interferenzen zu reduzieren und die Qualität der Kanalschätzung zu verbessern wurde im Rahmen von Standardisierungstreffen der 3GPP LTE (3rd Generation Partnership Project Long Term Evolution) vorgeschlagen, Referenzsymbole, die von einer sendenden Station in unterschiedlichen Sektoren gesendet werden, durch einen Code, d.h. eine CDM-Komponente (CDM: Code Division Multiplex), zu unterscheiden. Interferenzen mit Referenzsymbolen anderer sendender Stationen sollen durch ein Frequenzsprungverfahren (frequency hopping) hinsichtlich der zum Senden der Referenzsymbole verwendeten Subträger, d.h. der jeweiligen Trägerfrequenzen, reduziert werden, indem jede sendende Station eine andere Sprungsequenz verwendet.

Weiterhin wird vorgeschlagen, die Referenzsymbole mit einer größeren Sendeleistung zu senden als gleichzeitig auf anderen Subträgern, d.h. auf anderen Trägerfrequenzen gesendeten OFDM-Symbole, die Nutz- und/oder Signalisierungsdaten enthalten. Das Erhöhen der Sendeleistung bewirkt, dass die Referenzsymbole mit einem besseren Signal-zu-Rausch-Verhältnis (SNR: Signal to Noise Ratio) empfangen werden als die OFDM-Symbole mit Nutz- und/oder Signalisierungsdaten. Allerdings hat dies den Nachteil, dass Interferenzen zwischen benachbarten Funkzellen unterschiedlicher sendender Station erhöht werden.

WO 2005/099146 offenbart einen Sender für schnelles Frequenzspringen, bei dem ein erstes OFDM-Symbol auf einer ersten Trägerfrequenz moduliert wird und über einen ersten Übertragungskanal mit einer Luftschnittstelle, und die Änderung der ersten Trägerfrequenz während einer Zeitspanne zum Senden des ersten OFDM-Symbols verwendet übertragen wird, das Ändern der ersten Trägerfrequenz ist unabhängig von einem Wechsel der Übertragungseigenschaften des ersten Übertragungskanals während dieser durchgeführt. Die Daten werden übertragen, während ein Unterträger periodisch geändert oder Frequenzspringen periodisch durchgeführt wird, damit ein Benutzer keine starken Einbrüche in der signalstärke erleidet.

"Fast Frequency hopping OFDM concept"; Scholand et al., 23/6/2005; Electronic Letters, vol.41, No. 13, pp 748-749, ist ein Forschungspapier, das ein Systemkonzept offenbart, das orthogonales Frequenzmultiplexen (OFDM) mit schnellem Frequenzspringen (FFH), bekannt als FFH / OFDM-Konzept. Nach diesem Konzept werden die Datensymbole in der Frequenzdomäne in die Zeitdomäne durch eine unitäre Transformation abgebildet, die auf der Grundlage einer modifizierten-Version des bekannten inversen diskreten Fourier-Transformation basiert.

Der Erfindung liegt die Aufgabe zugrunde, ein vorteilhaftes Verfahren zum Betrieb eines Funkkommunikationssystems sowie ein entsprechendes Funkkommunikationssystem, eine entsprechende sendende Station und eine entsprechende empfangende Station anzugeben, mittels derer Interferenzen zwischen OFDM-Symbolen unterschiedlicher sendender Stationen verringert werden können.

Diese Aufgabe wird mit dem Verfahren, dem Funkkommunikationssystem, der sendenden Station und der empfangenden Station gemäß den unabhängigen Ansprüchen gelöst.

Vorteilhafte Ausgestaltungen und Weiterbildungen der Erfindung sind Gegenstand der abhängigen Ansprüche.

Bei dem erfindungsgemäßen Verfahren zum Betrieb eines Funkkommunikationssystem wird ÖFDM verwendet und eine erste sendende Station moduliert ein erstes OFDM-Symbol auf eine erste Trägerfrequenz auf und sendet das erste OFDM Symbol über einen ersten Übertragungskanal über eine Luftschnittstelle an eine erste empfangende Station. Erfindungsgemäß ändert die erste sendende Station die erste Trägerfrequenz während einer zum Senden des ersten OFDM-Symbols verwendeten Zeit kontinuierlich, wobei die Änderung der ersten Trägerfrequenz unabhängig von einer zeitlichen Änderung von Übertragungseigenschaften des ersten Übertragungskanals erfolgt.

Durch das Ändern der ersten Trägerfrequenz kann erreicht werden, dass Interferenzen durch andere OFDM-Symbole, die von anderen sendenden Stationen auf die erste Trägerfrequenz aufmoduliert und zeitgleich mit dem ersten OFDM-Symbol gesendet bzw. am Ort der ersten empfangenden Station empfangen werden, nur am Anfang des Empfangs des ersten OFDM-Symbols auftreten, sofern die anderen sendenden Stationen jeweils die erste Trägerfrequenz unverändert lassen oder anders Ändern als die erste sendende Station.

Für das Festlegen, in welcher Art und Weise die erste Trägersequenz geändert wird, wird nicht berücksichtigt, ob sich die Übertragungseigenschaften des Übertragungskanals während des Sendens des ersten OFDM-Symbols tatsächlich oder voraussichtlich ändern. Übertragungseigenschaften in Sinne dieser Patentanmeldung sind Eigenschaften des Übertragungskanals, die die Werte einer den Übertragungskanal mathematisch beschreibenden Kanalmatrix h beeinflussen. Beispielsweise gilt für einen linearen, zeitlich sich ändernden

Übertragungskanal: $y(t) = \int_{-\infty}^{\infty} h(t,\tau)\,x(t-\tau)\,d\tau$

mit x, dem gesendeten Signal und y, dem über den Übertragungskanal empfangenen Signal. Für die Änderung der ersten Trägerfrequenz ist somit unbeachtlich ob und in welcher Weise die auch als Kanalimpulsantwort bezeichnete Kanalmatrix h von der Zeit t abhängt.

Vorteilhafterweise wird für die Änderung der ersten Trägerfrequenz berücksichtig, welche Änderung der ersten Trägerfrequenz für eine zweite sendende Station für den Fall vorgesehen ist, dass die zweite sendende Station während des Sendens des ersten OFDM-Symbols ein zweites OFDM-Symbol auf der ersten Trägerfrequenz sendet. Die für die zweite sendende Station vorgesehene Änderung der ersten Trägerfrequenz wird somit immer berücksichtigt, unabhängig davon, ob die zweite sendende Station tatsächlich sendet oder nicht und an wen sie sendet.

Auf diese Weise kann die erste sendende Station die erste Trägerfrequenz immer derart ändern, dass, falls die zweite sendende Station gleichzeitig mit dem ersten OFDM-Symbol das zweite OFDM-Symbol senden sollte, erstes und zweites OFDM Symbol für einen möglichst geringen Teil der für das Senden des ersten OFDM-Symbols verwendeten Zeit mit der gleichen Frequenz gesendet werden. Das Funkkommunikationssystem kann somit so konfiguriert werden, dass sendende Stationen, die benachbarte Funkzellen versorgen, die jeweils verwendeten Trägerfrequenzen unterschiedlich ändern.

Die für das Senden eines OFDM-Symbols verwendete Zeit wird im Folgenden als Dauer des OFDM-Symbols bezeichnet.

Eine Weiterbildung der Erfindung sieht vor, dass die erste sendende Station weitere OFDM-Symbole auf weitere Trägerfrequenzen aufmoduliert und synchron mit dem ersten OFDM-Symbol sendet.

Vorteilhafterweise ändert die erste sendende Station die weiteren Trägerfrequenzen in gleicher Weise wie die erste Trägerfrequenz. Die relative Lage der Trägerfrequenzen zueinander bleibt somit während der Dauer des ersten OFDM-Symbols unverändert.

Vorteilhafterweise werden die Trägerfrequenzen ausschließlich erhöht oder erniedrigt.

Vorteilhafterweise erfolgt die Änderung der Trägerfrequenzen wenigstens zweimal und weist eine Schrittweite auf, die kleiner ist als der Frequenzabstand zweier benachbarter Trägerfrequenzen.

Vorteilhafterweise erfolgt die Änderung der Trägerfrequenzen kontinuierlich bis zum Erreichen eines jeweiligen Sollwertes.

Eine vorteilhafte Ausgestaltung der Erfindung sieht vor, dass das erste OFDM-Symbol als Referenzsymbol zur Kanalschätzung an die empfangende Station gesendet wird. Selbstverständlich können auch eines oder mehrere der weiteren OFDM-Symbole als Referenzsymbole zur Kanalschätzung synchron an die empfangende Station gesendet werden.

Vorteilhafterweise wird das erste OFDM-Symbol als Referenzsymbol mit einer höheren Sendeleistung gesendet als synchron gesendete weitere OFDM-Symbole, die zum Übertragen von Nutz- und/oder Signalisierungsdaten verwendet werden.

Auf diese Weise lässt sich erreichen, dass die erste empfangende Station das Referenzsymbol mit einem besseren SNR empfängt als OFDM-Symbole mit Nutz- und/oder Signalisierungsdaten, wobei durch die Änderung der Trägerfrequenzen gleichzeitig erreicht wird, dass das Referenzsymbol keine erhöhte Interferenz bei anderen empfangenden Stationen erzeugt.

Vorteilhafterweise empfängt die erste empfangende Station das erste OFDM-Symbol mit der ersten Trägerfrequenz und ändert die erste Trägerfrequenz während des Empfangs des ersten OFDM-Symbols in der gleichen Art und Weise, welche die erste sendende Station zum Senden verwendet hat. Der ersten empfangenden Station wird so ermöglicht, das erste OFDM-Symbol zu de kodieren, indem sie ihren Empfänger während der Dauer des ersten OFDM-Symbols jederzeit auf diejenige Frequenz einstellt, auf der das erste OFDM-Symbol gesendet wurde. Vorteilhafterweise ändert die erste empfangende Station die erste Trägerfrequenz in der gleichen Art und Weise, welche für die zweite sendende Station zum Senden des zweiten OFDM-Symbols auf der ersten Trägerfrequenz vorgesehen ist.

Auf diese Weise kann die erste empfangende Station, beispielsweise nachdem sie das erste OFDM-Symbol dekodiert hat oder parallel mit der Dekodierung des ersten OFDM-Symbols, das Empfangssignal erneut oder parallel verarbeiten und anstelle des ersten OFDM-Symbols oder zusätzlich zum ersten OFDM-Symbol das zweite OFDM-Symbol dekodieren und beispielsweise einen Übertragungskanal zur zweiten sendenden Station schätzen. Eine derartige Schätzung kann beispielsweise an die erste sendende Station übermittelt werden und dort bei Berechnungen für Verfahren zur Interferenzeliminierung (interference cancellation) verwendet werden.

Das erfindungsgemäße Funkkommunikationssystem weist alle Merkmale auf, die zur Durchführung des erfindungsgemäßen Verfahrens benötigt werden.

Insbesondere können entsprechende Mittel zur Durchführung der einzelnen Verfahrensschritte oder Verfahrensvarianten vorgesehen sein.

Die erfindungsgemäße sendende Station für ein Funkkommunikationssystem, das OFDM verwendet, weist Mittel zum Senden eines ersten OFDM-Symbols über einen ersten Übertragungskanal über eine Luftschnittstelle an eine erste empfangende Station auf wobei das erste OFDM-Symbol auf eine erste Trägerfrequenz aufmoduliert ist. Erfindungsgemäß weist die erste sendende Station weiterhin Mittel auf, die derart ausgebildet sind, dass die erste Trägerfrequenz während einer zum Senden des ersten OFDM-Symbols verwendeten Zeit kontinuierlich geändert wird, wobei die Änderung der ersten Trägerfrequenz unabhängig von einer zeitlichen Änderung von Überrtrangseigenschaften des ersten Übertragungskanals erfolgt. Insbesondere können entsprechende Mittel zur Durchführung der einzelnen erfindungsgemäßen Verfahrensschritte oder Verfahrensvarianten vorgesehen sein. Die erfindungsgemäße empfangende Station für ein Funkkommunikationssystem, das OFDM verwendet, weist Mittel zum Empfangen eines ersten OFDM-Symbols über einen ersten Übertragungskanal über eine Luftschnittstelle von einer ersten sendenden Station auf, wobei das erste OFDM-Symbol auf eine erste Trägerfrequenz aufmoduliert ist. Erfindungsgemäß weist die erste sendende Station weiterhin Mittel auf, die derart ausgebildet sind, dass sie das erste OFDM-Symbol mit der ersten Trägerfrequenz empfangen und die erste Trägerfrequenz während des Empfangs des ersten OFDM-Symbols in der gleichen Art und Weise ändern, welche die erste sendende Station zum Senden verwendet hat, wobei die Änderung der ersten Trägerfrequenz unabhängig von einer zeitlichen Änderung von Übertragungseigenschaften des ersten Übertragungskanals erfolgt. Insbesondere können entsprechende Mittel zur Durchführung der einzelnen erfindungsgemäßen Verfahrensschritte oder Verfahrensvarianten vorgesehen sein.

Die Erfindung wird im Folgenden anhand von in den Figuren dargestellten Ausführungsbeispielen näher erläutert. Es zeigen:

Fig. 1 eine schematische Darstellung einer erfindungsgemäßen Übertragung von OFDM-Symbolen, und

Fig. 2 eine schematische Darstellung einer erfindungsgemäßen Änderung der Trägerfrequenzen während des Sendens eines OFDM-Symbols.

Gleiche Bezugszeichen in den Figuren bezeichnen gleiche Gegenstände.

Eine sendende Station ist beispielsweise eine Teilnehmerstation oder eine Basisstation.

Eine empfangende Station ist beispielsweise eine Teilnehmerstation oder eine Basisstation.

Eine Teilnehmerstation ist beispielsweise ein Mobilfunkendgerät, insbesondere ein Mobiltelefon oder auch eine ortsbewegliche oder ortsfeste Vorrichtung zur Übertragung von Bild- und/oder Tondaten, zum Fax-, Short Message Service SMS-, Multimedia Messaging Service MMS- und/oder Email-Versand und/oder zum Internet-Zugang.

Eine Basisstation ist eine netzseitige Funkstation, die von einer Teilnehmerstation Nutz- und/oder Signalisierungsdaten empfängt und/oder Nutz- und/oder Signalisierungsdaten an die Teilnehmerstation sendet. Weiterhin sendet eine Basisstation Referenzsignale, beispielsweise Referenzsymbole an die Teilnehmerstation zum Schätzen eines Übertragungskanals. Ebenso kann die Basisstation entsprechende Referenzsignale von der Teilnehmerstation zur Kanalschätzung empfangen. Eine Basisstation ist über netzseitige Einrichtungen mit einem Kernnetz verbunden, über das Verbindungen in andere Funkkommunikationssysteme oder in andere Datennetze erfolgen. Unter einem Datennetz ist beispielsweise das Internet oder ein Festnetz mit beispielsweise leitungsvermittelten oder paketvermittelten Verbindungen für z.B. Sprache und/oder Daten zu verstehen.

Nachfolgend wird als sendende Station eine Basisstation betrachtet, ohne jedoch damit zum Ausdruck bringen zu wollen, dass die Erfindung hierauf beschränkt sein soll.

Nachfolgend wird als empfangende Station eine Teilnehmerstation betrachtet, ohne jedoch damit zum Ausdruck bringen zu wollen, dass die Erfindung hierauf beschränkt sein soll.

Die Erfindung kann vorteilhaft in beliebigen Funkkommunikationssystemen verwendet werden, die OFDM verwenden. Unter Funkkommunikationssystemen sind Systeme zu verstehen, in denen eine Datenübertragung zwischen Funkstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem UMTS-(Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of Electrical and Electronics Engineers) 802.11a-i, HiperLAN1 und HiperLAN2 (HiperLAN: high performance radio local area network) sowie Bluetooth-Netze und Breitbandnetze mit drahtlosem Zugang beispielsweise gemäß IEEE 802.16.

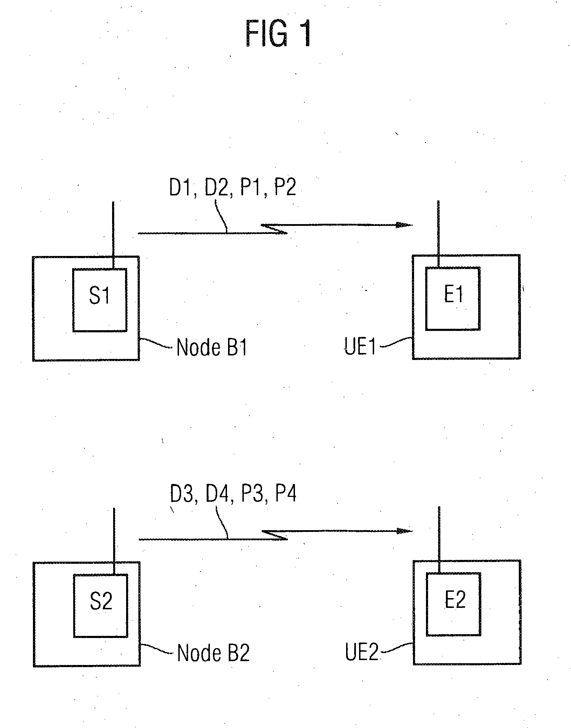

Figur 1 zeigt schematisch eine erste Basisstation NodeB1 mit einer ersten Sendeeinheit S1 zum Senden von OFDM-Symbolen. Die erste Basisstation NodeB1 sendet über einen ersten Übertragungskanal über eine Luftschnittstelle gleichzeitig, d.h. synchron, vier OFDM-Symbole. Bei einem ersten OFDM-Symbol P1 und einem zweiten OFDM-Symbol P2 handelt es sich jeweils um ein Referenzsymbol während ein drittes OFDM-Symbol D1 und ein viertes OFDM-Symbol D2 jeweils Nutzdaten beinhalten. Die vier OFDM-Symbole P1, P2, D1, D2 werden von der ersten Basisstation NodeB1 an eine erste Teilnehmerstätion UE1 gesendet. Die gesendeten Referenzsymbole P1, P2 sind der ersten Teilnehmerstation UE1 bekannt und dienen beispielsweise durch Korrelation mit den entsprechenden empfangenen Referenzsymbolen der ersten Teilnehmerstation UE1 zum Schätzen der Übertragungseigenschaften des ersten Übertragungskanals. Die erste Teilnehmerstation weist eine erste Empfangseinheit E1 zum Empfangen und Dekodieren von OFDM-Symbolen auf.

Weiterhin zeigt Figur 1 schematisch eine zweite Basisstation NodeB2 mit einer zweiten Sendeeinheit S2 zum Senden von OFDM-Symbolen. Die zweite Basisstation NodeB2 sendet über einen zweiten Übertragungskanal über eine Luftschnittstelle gleichzeitig, d.h. synchron, vier OFDM-Symbole P3, P4, D3, D4. Bei einem fünften OFDM-Symbol P3 und einem sechsten OFDM-Symbol P4 handelt es sich jeweils um ein Referenzsymbol während ein siebtes OFDM-Symbol D3 und ein achtes OFDM-Symbol D4 jeweils Nutzdaten beinhalten. Die vier OFDM-Symbole P3, P4, D3, D4 werden von der zweiten Basisstation NodeB2 an eine zweite Teilnehmerstation UE2 gesendet. Die vier OFDM-Symbole P3, P4, D3, D4 werden synchron mit den vier von der ersten Basisstation NodeB1 gesendeten OFDM-Symbolen P1, P2, D1, D2 gesendet. Die Referenzsymbole P3, P4 sind der zweiten Teilnehmerstation UE2 bekannt und dienen beispielsweise durch Korrelation mit den entsprechenden empfangenen Referenzsymbolen der zweiten Teilnehmerstation UE2 zum Schätzen der Übertragungseigenschaften des zweiten Übertragungskanals. Die zweite Teilnehmerstation UE2 weist eine zweite Empfangseinheit E2 zum Empfangen und Dekodieren von OFDM-Symbolen auf.

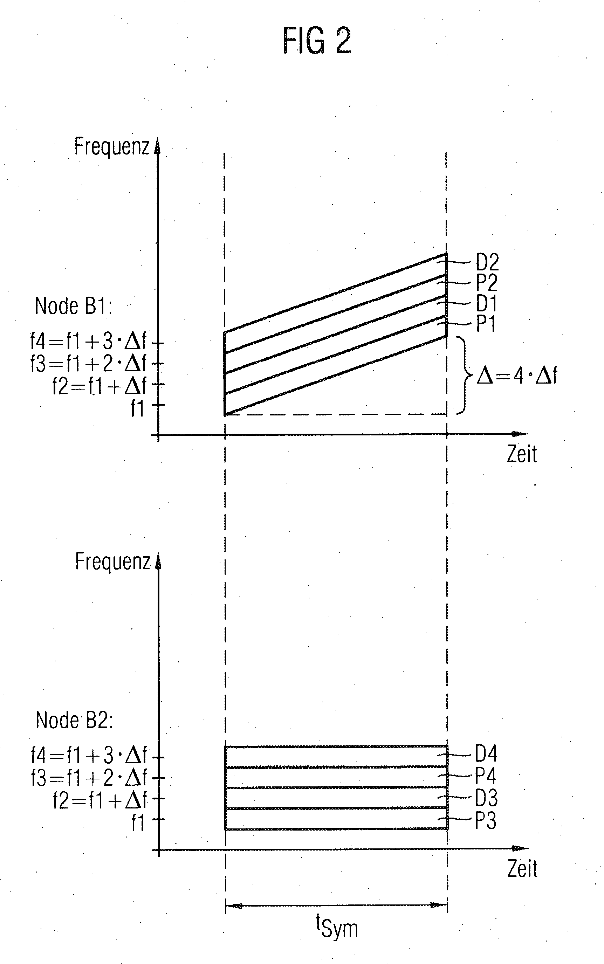

Die Dauer $t_{SYM}$ eines OFDM-Symbols beträgt beispielsweise 66 Mikrosekunden. Jedes OFDM-Symbol wird auf jeweils einem Subträger gesendet. Jeder Subträger hat eine Trägerfrequenz f1, f2, f3, f4 und eine Bandbreite $\Delta$f. Die Subträger weisen beispielsweise eine gleiche Bandbreite $\Delta$f von jeweils 15 kHz auf. Selbstverständlich können die Subträger auch unterschiedliche Bandbreiten aufweisen. Beispielsweise kann die Gesamtbandbreite, die in dem Funkkommunikationssystem für Subträger zur Verfügung steht 20 MHz betragen, so dass wesentlich mehr als die in Figur 2 schematisch dargestellten Subträger, d.h. Trägerfrequenzen, gleichzeitig mit beispielsweise jeweils einem OFDM-Symbol moduliert und gesendet werden können.

Referenzsymbole werden zum Erzielen eines besseren Signal-zu-Rauschen-Verhältnisses beispielsweise mit einer größeren Sendeleistung gesendet als synchron gesendete OFDM-Symbole mit Nutz- und/oder Signalisierungsdaten.

Die erste Basisstation ändert während der Dauer $t_{SYM}$ der gesendeten OFDM Symbole P1, P2, D1, D2 die jeweiligen Trägerfrequenzen wie in der oberen Grafik in Figur 2 dargestellt ab. Zum Beginn der OFDM-Symbole P1, P2, D1, D2 wird das erste OFDM-Symbol P1 auf eine erste Trägerfrequenz f1, das dritte OFDM-Symbol D1 auf eine zweite Trägerfrequenz f2 = f1 + $\Delta$f, das zweite OFDM-Symbol P2 auf eine dritte Trägerfrequenz f3 = f1 + 2*$\Delta$f und das vierte OFDM-Symbol D2 auf eine vierte Trägerfrequenz f4 = f1 + 4*$\Delta$f aufmoduliert. Die Trägerfrequenzen f1, f2, f3, f4 ändert die erste Basisstation NodeB1 während der Dauer $t_{SYM}$ kontinuierlich und in diesem Ausführungsbeispiel linear und in gleicher Weise. Am Ende der Dauer $t_{SYM}$ hat das jedes der OFDM-Symbole P1, P2, D1, D2 eine Trägerfrequenz von jeweiliger anfänglicher Trägerfrequenz f1, f2, f3 bzw. f4 plus viermal die Bandbreite $\Delta$f eines Subträgers.

Selbstverständlich kann die erste Basisstation NodeB1 die Trägerfrequenzen f1, f2, f3, f4 während der Dauer $t_{SYM}$ auch diskontinuierlich und unterschiedlich ändern.

Während der Dauer $t_{SYM}$ sendet die zweite Basisstation ihre vier OFDM-Symbole P3, P4, D3, D4 ebenfalls auf der ersten, zweiten, dritten und vierten Trägerfrequenz f1, f2, f3, f4. Das fünfte OFDM-Symbol P3 wird auf die erste Trägerfrequenz f1, das siebte OFDM-Symbol D3 auf die zweite Trägerfrequenz f2, das sechste OFDM-Symbol P4 auf die dritte Trägerfrequenz f3 und das achte OFDM-Symbol D4 auf die vierte Trägerfrequenz f4 aufmoduliert. Die zweite Basisstation NodeB2 ändert, wie in der unteren Grafik in Figur 2 dargestellt, die für ihre OFDM-Symbole verwendeten Trägerfrequenzen während der Dauer $t_{SYM}$ nicht.

Das Funkkommunikationssystem kann so konfiguriert werden, dass eine dritte Basisstation, die beispielsweise ebenfalls von der ersten empfangenden Station UE1 empfangen wird, die gleichen Trägerfrequenzen für Referenzsymbole und/oder OFDM-Symbole mit Nutz- und/oder Signalisierungsdaten verwendet wie die erste und die zweite Basisstation NodeB1, NodeB2, aber die dritte Basisstation ändert beispielsweise die Trägerfrequenzen während der Dauer $t_{SYM}$ umgekehrt wie die erste Basisstation NodeB1, d.h. um -4* $\Delta$f. In entsprechender Weise können die Trägerfrequenzen weiterer Basisstationen geändert werden, wobei die Änderungen derart unterschiedlich sein sollten, dass möglichst geringe Interferenzen bei Teilnehmerstationen entstehen, die von benachbarten Basisstationen versorgt werden.

Selbstverständlich kann das Funkkommunikationssystem so konfiguriert werden, dass eine Basisstationen nur dann die verwendeten Trägerfrequenzen während der Dauer eines OFDM-Symbols ändert, wenn wenigstens eines der gleichzeitig gesendeten OFDM-Symbole ein Referenzsymbol ist. Werden gleichzeitig nur OFDM-Symbole mit Nutz- und/oder Signalisierungsdaten gesendet, werden die verwendeten Trägerfrequenzen während der Symboldauer nicht geändert. Es kann auch vorgesehen sein, während der Dauer eines OFDM-Symbols, das Referenzsymbole enthält, die für die Referenzsymbole verwendeten Trägerfrequenzen zu ändern und keine Nutz- und oder Signalisierungsdaten auf weitere Trägerfrequenzen aufzumodulieren oder beispielsweise nur auf die zu jedem zweiten oder vierten Referenzsymbol benachbarten Trägerfrequenzen aufzumodulieren.

Die erste Teilnehmerstation UE1 ändert zum Empfangen der von der ersten Basisstation NodeB1 gesendeten OFDM-Symbole P1, P2, D1, D2 die jeweiligen Trägerfrequenzen ausgehend von f1, f2, f3 und f4 während der Dauer $t_{SYM}$ der OFDM-Symbole in gleicher Weise wie dies zuvor die erste Basisstation NodeB1 zum Senden getan hat (siehe obere Grafik in Figur 2), bevor die erste Teilnehmerstation UE1 das Empfangssignal zum Dekodieren der OFDM-Symbole P1, P2, D1, D2 weiter verarbeitet, d.h. insbesondere einer in OFDM-Systemen verwendeten FFT (Fast Fourier Transformation) zuführt.

In dem vorliegenden Ausführungsbeispiel befinden sich die erste Teilnehmerstation UE1 und die zweite Teilnehmerstation UE2 im Funkbereich der ersten und der zweiten Basisstation NodeB1, NodeB2 und sind derart konfiguriert, dass sie beim Empfang und Dekodieren der jeweils, zu empfangenden OFDM-Symbole das jeweilige Empfangssignal parallel ein zweites Mal verarbeiten. Die parallele Verarbeitung erfolgt derart, dass die erste Teilnehmerstation UE1 so wie die zweite Basisstation NodeB2 zeitlich konstante Trägerfrequenzen verwendet, um auf diese Weise insbesondere die Referenzsymbole P3 und P4 der zweiten Basisstation NodeB2 dekodieren zu können, und dass die zweite Teilnehmerstation UE2 die Trägerfrequenzen so ändert wie die erste Basisstation NodeB1, um auf diese Weise insbesondere die Referenzsymbole P1 und P2 der ersten Basisstation NodeB1 dekodieren zu können.

Die Erfindung kann selbstverständlich auch für Übertragungen in Aufwärtsrichtung (uplink), d.h. für Übertragungen von der ersten Teilnehmerstation zur ersten Basisstation NodeB1 verwendet werden. Für Übertragungen in Aufwärtsrichtung kann vorgesehen sein, zumindest die OFDM-Symbole, die Nutz- und/oder Signalisierungsdaten tragen, vor dem Durchführen der in OFDM-Systemen verwendeten IFFT (Inverse Fast Fouriertransformation) einer DFT (Discrete Fouriertransformation) zuzuführen. In diesem Fall werden die der DFT unterzogenen OFDM-Symbole auf alle dem DFT-Ergebnis zugeordneten Subträger, d.h. Trägerfrequenzen, gleichzeitig aufmoduliert, d.h. diese OFDM-Symbole werden auf mehreren Trägerfrequenzen gleichzeitig gesendet.

**Patentansprüche**

**1.** Verfahren zum Betrieb eines Funkkommunikationssystem, das OFDM verwendet, bei dem eine erste sendende Station ein erstes Symbol auf eine erste Trägerfrequenz eines OFDM-Symbols aufmoduliert und über einen ersten Übertragungskanal über eine Luftschnittstelle an eine erste empfangende Station sendet,
**dadurch gekennzeichnet ,dass** die erste sendende Station die erste Trägerfrequenz während einer zum Senden des OFDM-Symbols verwendeten Zeit <u>kontinuierlich</u> ändert, wobei die Änderung der ersten Trägerfrequenz unabhängig von einer zeitlichen Änderung von Übertragungseigenschaften des ersten Übertragungskanals erfolgt.

**2.** Verfahren nach Anspruch 1,
**dadurch gekennzeichnet,**
dass für die Änderung der ersten Trägerfrequenz berücksichtigt wird, welche Änderung der ersten Trägerfrequenz für eine zweite sendende Station für den Fall vorgesehen ist, dass die zweite sendende Station während des Sendens des ersten Symbols ein zweites Symbol auf der ersten Trägerfrequenz sendet.

**3.** Verfahren nach einem der vorstehenden Ansprüche,
**dadurch gekennzeichnet,**
dass die erste sendende Station weitere Symbole auf weitere Trägerfrequenzen aufmoduliert und synchron mit dem ersten Symbol sendet.

**4.** Verfahren nach Anspruch 3,
**dadurch gekennzeichnet,**
dass die erste sendende Station die weiteren Trägerfrequenzen in gleicher Weise ändert wie die erste Trägerfrequenz.

**5.** Verfahren nach einem der vorstehenden Ansprüche,
**dadurch gekennzeichnet,**
dass Trägerfrequenzen ausschließlich erhöht oder erniedrigt werden.

**6.** Verfahren nach einem der vorstehenden Ansprüche,
**dadurch gekennzeichnet,**
dass die Änderung der Trägerfrequenzen wenigstens zweimal erfolgt und eine Schrittweite aufweist, die kleiner ist als der Frequenzabstand zweier benachbarter Trägerfrequenzen.

**7.** Verfahren nach einem der vorstehenden Ansprüche,
**dadurch gekennzeichnet,**
dass die Änderung der Trägerfrequenzen kontinuierlich bis zum Erreichen eines jeweiligen Sollwertes erfolgt.

**8.** Verfahren nach einem der vorstehenden Ansprüche,
**dadurch gekennzeichnet,**
dass das erste Symbol als Referenzsymbol zur Kanalschätzung an die empfangende Station gesendet wird.

**9.** Verfahren nach Anspruch 8,
**dadurch gekennzeichnet,**
dass das erste Symbol als Referenzsymbol mit einer höheren Sendeleistung gesendet wird als synchron gesendete weitere Symbole, die zum Übertragen von Nutz-und/oder Signalisierungsdaten verwendet werden.

10. Verfahren nach einem der vorstehenden Ansprüche, **dadurch gekennzeichnet,** dass die erste empfangende Station das erste Symbol mit der ersten Trägerfrequenz empfängt und die erste Trägerfrequenz während des Empfangs des ersten Symbols in der gleichen Art und Weise ändert, welche die erste sendende Station zum Senden verwendet hat.

11. Verfahren nach Anspruch 10, **dadurch gekennzeichnet,** dass die erste empfangende Station die erste Trägerfrequenz in der gleichen Art und Weise ändert, welche für die zweite sendende Station zum Senden des zweiten Symbols auf der ersten Trägerfrequenz vorgesehen ist.

12. Funkkommunikationssystem mit Mitteln zum Durchführen des Verfahrens nach einem der Ansprüche 1 bis 11.

13. Sendende Station für ein Funkkommunikationssystem, das OFDM verwendet, mit Mitteln zum Senden eines OFDM-Symbols über einen ersten Übertragungskanal über eine Luftschnittstelle an eine erste empfangende Station, wobei ein erstes Symbol auf eine erste Trägerfrequenz des OFDM-Symbols aufmoduliert ist, **gekennzeichnet dadurch,** dass die sendende Station Mittel aufweist, die derart ausgebildet sind, dass die erste Trägerfrequenz während einer zum Senden des OFDM-Symbols verwendeten Zeit <u>kontinuierlich</u> geändert wird, wobei die Änderung der ersten Trägerfrequenz unabhängig von einer zeitlichen Änderung von Übertragungseigenschaften des ersten Übertragungskanals erfolgt.

14. Empfangende Station für ein Funkkommunikationssystem, das OFDM verwendet, mit Mitteln zum Empfangen eines OFDM-Symbols über einen ersten Übertragungskanal über eine Luftschnittstelle von einer ersten sendenden Station, wobei das erste Symbol auf eine erste Trägerfrequenz des OFDM-Symbols aufmoduliert ist, **gekennzeichnet dadurch,** dass die empfangende Station Mittel aufweist, die derart ausgebildet sind, dass sie das OFDM-Symbol mit der ersten Trägerfrequenz empfangen und die erste Trägerfrequenz während des Empfangs des OFDM-Symbols in der gleichen Art und Weise <u>kontinuierlich</u> ändern, welche die erste sendende Station zum Senden verwendet hat, wobei die Änderung der ersten Trägerfrequenz unabhängig von einer zeitlichen Änderung von Übertragungseigenschaften des ersten Übertragungskanals erfolgt.

**Claims**

1. Method for operating a radio communication system which uses OFDM, in which a first sending station modulates a first symbol onto a first carrier frequency of an OFDM symbol and sends it to a first receiving station via a first transmission channel using an air interface, **characterized in that** the first sending station continuously changes the first carrier frequency during a time used for sending the OFDM symbol, the changing of the first carrier frequency being carried out independently of a changing of transmission characteristics of the first transmission channel over time.

2. Method according to Claim 1, **characterized in that**, for changing the first carrier frequency, it is taken into consideration which change of the first carrier frequency is provided for a second sending station in the case where the second sending station sends a second symbol on the first carrier frequency during the sending of the first symbol.

3. Method according to one of the preceding claims, **characterized in that** the first sending station modulates, and sends synchronously with the first symbol, other symbols onto other carrier frequencies.

4. Method according to Claim 3, **characterized in that** the first sending station changes the further carrier frequencies in the same manner as the first carrier frequency.

5. Method according to one of the preceding claims, **characterized in that** carrier frequencies are exclusively increased or decreased.

6. Method according to one of the preceding claims, **characterized in that** the change of the carrier frequencies occurs at least twice and has a step length which is less than the frequency spacing between two adjacent carrier frequencies.

7. Method according to one of the preceding claims, **characterized in that** the change of the carrier frequencies is continuous until a respective nominal value is reached.

**8.** Method according to one of the preceding claims, **characterized in that** the first symbol is sent to the receiving station as reference symbol for channel estimation.

**9.** Method according to Claim 8, **characterized in that** the first symbol, as reference symbol, is sent with a higher transmitting power than other symbols sent synchronously, which are used for transmitting useful data and/or signaling data.

**10.** Method according to one of the preceding claims, **characterized in that** the first receiving station receives the first symbol with the first carrier frequency and, during the reception of the first symbol, changes the first carrier frequency in the same manner as was used by the first sending station for sending.

**11.** Method according to Claim 10, **characterized in that** the first receiving station changes the first carrier frequency in the same manner as is provided for the second sending station for sending the second symbol on the first carrier frequency.

**12.** Radio communication system with means for carrying out the method according to one of Claims 1 to 11.

**13.** Sending station for a radio communication system which uses OFDM, with means for sending an OFDM symbol to a first receiving station via a first transmission channel using an air interface, a first symbol being modulated onto a first carrier frequency of the OFDM symbol, **characterized in that** the sending station has means which are constructed in such a manner that the first carrier frequency is changed continuously during a time used for sending the OFDM symbol, the changing of the first carrier frequency being carried out independently of a changing of transmission characteristics of the first transmission channel over time.

**14.** Receiving station for a radio communication system which uses OFDM, with means for receiving an OFDM symbol from a first sending station via a first transmission channel using an air interface, the first symbol being modulated onto a first carrier frequency of the OFDM symbol, **characterized in that** the receiving station has means which are constructed in such a manner that they receive the OFDM symbol with the first carrier frequency and, during the reception of the OFDM symbol, continuously change the first carrier frequency in the same manner as was used by the first sending station for sending, the changing of the first carrier frequency being carried out independently of a changing of transmission characteristics of the first transmission channel over time.

**Revendications**

**1.** Procédé d'exploitation d'un système de radiocommunication qui utilise l'OFDM, selon lequel une première station émettrice module un premier symbole sur une première fréquence porteuse d'un symbole OFDM et l'envoie à une première station réceptrice sur un premier canal de transmission via une interface aérienne, **caractérisé en ce que** la première station émettrice modifie en continu la première fréquence porteuse pendant un temps utilisé pour émettre le symbole OFDM, la modification de la première fréquence porteuse s'effectuant indépendamment d'une modification temporelle de caractéristiques de transmission du premier canal de transmission.

**2.** Procédé selon la revendication 1, **caractérisé en ce qu'**il est pris en compte, pour la modification de la première fréquence porteuse, quelle modification de la première fréquence porteuse est prévue pour une deuxième station émettrice pour le cas où la deuxième station émettrice émet un deuxième symbole sur la première fréquence porteuse pendant l'émission du premier symbole.

**3.** Procédé selon l'une des revendications précédentes, **caractérisé en ce que** la première station émettrice module d'autres symboles sur d'autres fréquences porteuses et les émet synchroniquement avec le premier symbole.

**4.** Procédé selon la revendication 3, **caractérisé en ce que** la première station émettrice modifie les autres fréquences porteuses de la même manière que la première fréquence porteuse.

**5.** Procédé selon l'une des revendications précédentes, **caractérisé en ce que** les fréquences porteuses sont exclusivement augmentées ou abaissées.

**6.** Procédé selon l'une des revendications précédentes, **caractérisé en ce que** la modification des fréquences porteuses a lieu au moins deux fois et présente un pas inférieur à l'intervalle de fréquences entre deux fréquences porteuses voisines.

**7.** Procédé selon l'une des revendications précédentes, **caractérisé en ce que** la modification des fréquences porteuses s'effectue en continu jusqu'à l'obtention d'une valeur de consigne respective.

**8.** Procédé selon l'une des revendications précédentes, **caractérisé en ce que** le premier symbole est envoyé en tant que symbole de référence à la station réceptrice aux fins de l'estimation de canal.

**9.** Procédé selon la revendication 8, **caractérisé en ce que** le premier symbole est émis en tant que symbole de référence avec une puissance d'émission supérieure par rapport à d'autres symboles émis synchroniquement qui sont utilisés pour la transmission de données utiles et/ou de signalisation.

**10.** Procédé selon l'une des revendications précédentes, **caractérisé en ce que** la première station réceptrice reçoit le premier symbole avec la première fréquence porteuse et modifie la première fréquence porteuse pendant la réception du premier symbole de la même manière que celle utilisée par la première station émettrice aux fins de l'émission.

**11.** Procédé selon la revendication 10, **caractérisé en ce que** la première station réceptrice modifie la première fréquence porteuse de la même manière que celle prévue pour la deuxième station émettrice aux fins de l'émission du deuxième symbole sur la première fréquence porteuse.

**12.** Système de radiocommunication comportant des moyens permettant d'exécuter le procédé selon l'une des revendications 1 à 11.

**13.** Station émettrice pour un système de radiocommunication qui utilise l'OFDM, comportant des moyens pour envoyer un symbole OFDM à une première station réceptrice sur un premier canal de transmission via une interface aérienne, un premier symbole étant modulé sur une première fréquence porteuse du symbole OFDM, **caractérisée en ce que** la station émettrice comporte des moyens qui sont réalisés de telle manière que la première fréquence porteuse est modifiée en continu pendant un temps utilisé pour l'émission du symbole OFDM, la modification de la première fréquence porteuse s'effectuant indépendamment d'une modification temporelle de caractéristiques de transmission du premier canal de transmission.

**14.** Station réceptrice pour un système de radiocommunication qui utilise l'OFDM, comportant des moyens pour recevoir un symbole OFDM d'une première station émettrice sur un premier canal de transmission via une interface aérienne, le premier symbole étant modulé sur une première fréquence porteuse du symbole OFDM, **caractérisée en ce que** la station réceptrice comporte des moyens qui sont réalisés de telle manière qu'ils reçoivent le symbole OFDM avec la première fréquence porteuse et modifient la première fréquence porteuse en continu pendant la réception du symbole OFDM de la même manière que celle utilisée par la première station émettrice aux fins de l'émission, la modification de la première fréquence porteuse s'effectuant indépendamment d'une modification temporelle de caractéristiques de transmission du premier canal de transmission.

# FIG 1

# FIG 2

Frequenz

Node B1:

$f4 = f1 + 3 \cdot \Delta f$
$f3 = f1 + 2 \cdot \Delta f$
$f2 = f1 + \Delta f$
$f1$

D2
P2
D1
P1

$\Delta = 4 \cdot \Delta f$

Zeit

Frequenz

Node B2:

$f4 = f1 + 3 \cdot \Delta f$
$f3 = f1 + 2 \cdot \Delta f$
$f2 = f1 + \Delta f$
$f1$

D4
P4
D3
P3

Zeit

$t_{Sym}$

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005099146 A

**In der Beschreibung aufgeführte Nicht-Patentliteratur**

- **SCHOLAND et al.** Fast Frequency hopping OFDM concept. *Electronic Letters,* 23. Juni 2005, vol. 41 (13), 748-749